Europäisches Patentamt

European Patent Office

Office européen des brevets

(11) Publication number: **0 147 509**
**B1**

(12) **EUROPEAN PATENT SPECIFICATION**

(45) Date of publication of patent specification: **26.04.89**

(51) Int. Cl.⁴: **H 02 H 3/02,** H 02 H 3/08, H 01 H 87/00

(21) Application number: **84106563.4**

(22) Date of filing: **08.06.84**

(54) **High-speed current limiting circuit breaker.**

(30) Priority: **10.11.83 JP 212687/83**

(43) Date of publication of application:
**10.07.85 Bulletin 85/28**

(45) Publication of the grant of the patent:
**26.04.89 Bulletin 89/17**

(84) Designated Contracting States:
**CH DE FR GB IT LI SE**

(56) References cited:
EP-A-0 074 186
DE-B-2 228 592
US-A-3 868 552

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Yokouchi, Kazuhiro**
**Mitsubishi Denki K.K. 1-1, Tsukaguchi honmachi**
**8-chome Amagasaki-shi Hyogo-ken, 661 (JP)**
Inventor: **Yoshida, Shigehiro**
**Mitsubishi Denki K.K. 1-1, Tsukaguchi honmachi**
**8-chome Amagasaki-shi Hyogo-ken, 661 (JP)**
Inventor: **Wada, Yuichi c/o Chuo-kenkyusho**
**Mitsubishi Denki K.K. 1-1, Tsukaguchi honmachi**
**8-chome Amagasaki-shi Hyogo-ken, 661 (JP)**

(74) Representative: **Kuhnen, Wacker & Partner**
**Schneggstrasse 3-5 Postfach 1553**
**D-8050 Freising (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a high-speed current limiting circuit breaker for limiting and breaking a short-circuit current at a high-speed, and which can be used more frequently than conventional ones.

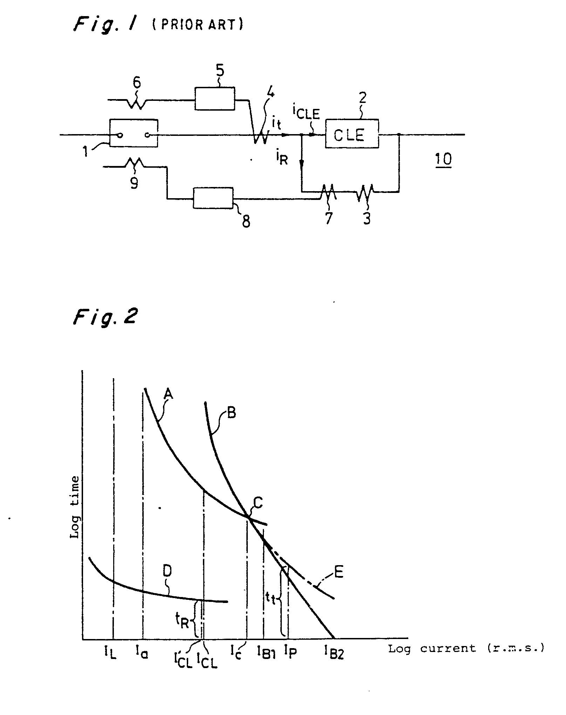

Hitherto, a conventional current limiting circuit breaker as shown in Figure 1 comprises a self-recovery type, current limiting element 2 (hereinafter referred to as "current limiting element") connected in series with a circuit breaker 1 and in parallel with a resistance 3. A first current transformer 4 for detecting an over-current is provided between the current limiting element 2 and the circuit breaker 1. A first relay 5, for determining operation time and current of the circuit breaker 1, is controlled by an output of the current transformer 4. The circuit breaker 1 is tripped by a first trip coil 6 in response to a signal from relay 5.

Further provided is a second current transformer 7 for detecting operation of the current limiting element 2. A second relay 8 is responsive to an output of the second current transformer 7, and a second trip coil 9 for tripping the circuit breaker 1 is responsive to the output of the second relay 8 (see also document EP—A—74 186).

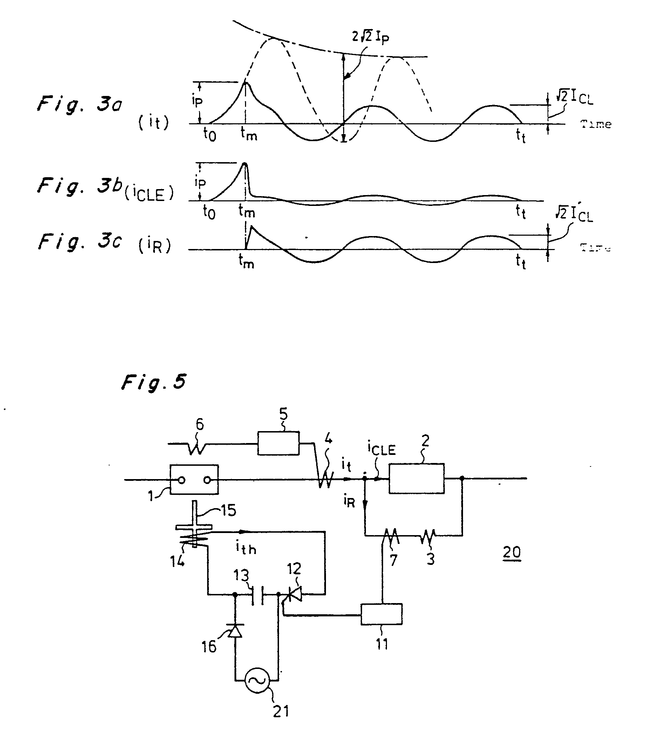

Operation of the current limiting circuit breaker in Figure 1 is explained as follows with reference to the current versus time characteristic graph of Figure 2 and current limiting breaking waveforms of Figure 3. In Figure 2, curve A represents operation time in accordance with the output of the first current transformer 4 as a function of current through the circuit breaker 1, and curve B represents evaporation time as a function of current through current limiting element 2. The curves A and B intersect at point C. A curve D represents operation time in accordance with the output of the second current transformer 7 as a function of current of the circuit breaker 1. When the current flowing through the second transformer 7 is $I'_{CL}$, the circuit breaker 1 is broken at time $t_R$ as shown in Figure 2. Curve E represents resultant operation time as a function of current through the current limiting circuit breaker 10. The resultant operation time is a sum of the operation time of the circuit breaker 1, controlled by the output of the second current transformer 3, and an evaporation time of the current limiting element 2.

As shown in Figure 2, in a current region that is smaller than a minimum set current value $I_a$ as well as a load current $I_L$ of the circuit breaker 1, the first relay 5 and the circuit breaker 1 are not controlled by the output of the first current transformer 4. In a current region between the minimum set current value $I_a$ and a current $I_c$ at the intersection point C, the circuit breaker 1 operates before the current limiting element 2 evaporates, as indicated by the curve A as a result of the operation of the first relay 5 responding to the output of the first current transformer 4. In a current region between a current $I_c$, and a rating breaking current $I_{B2}$ of the current limiting element 2, which region includes a rating breaking current $I_{B1}$ of the circuit breaker 1, the current limiting element 2 initially evaporates and the resistance value of the current limiting element 2 increases rapidly as shown by characteristic curve B. As a result, current flows in the parallel resistance 3, causing the second current transformer 7 and in turn the second relay 8 to operate. Accordingly, current flows in the second trip coil 9 and the circuit breaker 1 breaks (opens). The curve E represents the total of these operation times.

Current-limiting and breaking in the current region between the current $I_c$ and the current $I_{B2}$ are described as follows with reference to Figure 3. When a fault current, for example, an overcurrent $I_p$ (r. m. s.), flows through the current limiting element 2, a total overcurrent $i_t$, which is detected by the first current transformer 4, varies as shown by curve $i_t$ of Figure 3(a). Thus, when an overcurrent occurs at time $t_o$, the current $i_{CLE}$ of the current limiting element varies as shown by curve $i_{CLE}$ of Figure 3(b). From the time $t_o$ to the time $t_m$, the value of the current $i_{CLE}$ is equal to the overcurrent $i_t$, and the current $i_{CLE}$ continues to flow until the current limiting element 2 evaporates. While the current limiting element 2 is evaporated, namely, at and after the time $t_m$, most of the overcurrrent flows through parallel resistance 3, since the resistance of the current limiting element 2 becomes extremely large compared to that of resistance 3 as a result of the evaporation. The current $i_{CLE}$ of the current limiting element thereby becomes limited to a small magnitude.

Thus, while the current limiting element 2 is evaporated, a current as shown by curve $i_R$ of Figure 3(c) flows through the parallel resistance 3. The second current transformer 7 detects the resistance current $i_R$, and thereby the second trip coil 9 causes the circuit breaker 1 to break the overcurrent at a time $t_t$.

The operation shown in Figure 3 shows that the overcurrent $i_t$ is limited to a current-limited peak value $i_p$, and after current limiting, to a follow-current $I_{CL}$ r. m. s., and the circuit is broken within a short time of 2.5 cycles.

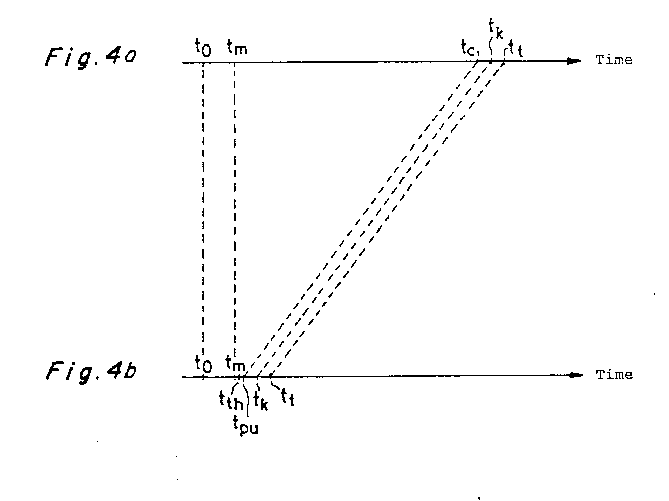

Figure 4(a) and 4(b) are time charts comparing the conventional circuit of Figure 1 and an embodiment of the present invention, from occurrence of the overcurrent to the breaking of the fault current. As is apparent from Figure 4(a), the time $t_m - t_c$, namely from the starting time $t_m$ of the current limiting element 2 to the time $t_o$ at which the second trip coil 9 knocks the latch of the circuit breaker 1 of the prior art, is very long.

In Figure 4(a) and Figure 4(b), the times on the time axes designate the following:

$t_o$...is the time when the overcurrent occurs,

$t_m$...is the time when the current limiting element 2 has evaporated,

$t_{th}$...is the time of turn on of the thyristor,

$t_{pu}$...is the tripping time of the rod 15 on the latch of the circuit breaker,

$t_c$...is the time when the trip coil 9 trips the latch of the circuit breaker,

$t_k$...is the time when the circuit breaker begins to open,

$t_t$...is the time when the breaking operation of the circuit breaker is completed.

It is confirmed that the shorter the time from an occurrence to the breaking of the overcurrent, the larger is the number of times of repeated use of which the current limiting element 2 is capable. By considering the above-mentioned facts, the present invention is made.

Therefore, the present invention is intended to provide a high-speed current limiting circuit breaker having a short time duration from the operation of the current limiting element to the breaking of the circuit breaker. Faster operation than is possible in the prior art is obtainable by utilizing a movable rod which knocks the latch of the circuit breaker through electro-magnetic repulsion, induced by an electronic coil circuit. Damage to the current limiting element is thereby minimized and hence the number of times that the high-speed current limiting circuit breaker can be used is increased.

A high-speed current limiting circuit breaker of the present invention comprises:

a self-recovery type current limiting element for limiting a fault current,

a resistance connected in parallel to the self-recovery type current limiting element,

a first fault current detector for detecting a fault current flowing through the circuit breaker, the first detector being disposed in series with the circuit breaker,

a first breaker tripping apparatus responsive to an output of the first fault current detector for tripping the circuit breaker,

a second fault current detector for detecting a fault current flowing thorugh the parallel resistance,

a switching element connected to be actuated by an output on the second fault current detector,

an electro-magnetic repulsion coil connected in series to the switching element and a power source in a manner to be excited when the switching element is actuated, and

a movable rod responsive to an electro-magnetic field developed by said repulsion coil for breaking the circuit breaker by tripping a latch in the circuit breaker.

Figure 1 is a circuit block diagram of a conventional high-speed current limiting circuit breaker.

Figure 2 is a graph of the operation time-current characteristic of a conventional high-speed current limiting circuit breaker.

Figure 3 is a graph of the current breaking characteristic of the conventional high-speed current limiting circuit breaker.

Figure 4(a) is a time chart showing operation of the conventional high-speed current limiting circuit breaker.

Figure 4(b) is a time chart showing operation of the high-speed current limiting circuit breaker of the present invention.

Figure 5 is a circuit block diagram of an embodiment of a high-speed current limiting circuit breaker of the present invention.

Figure 6(a), (b), (c) and (d) are graphs of current breaking characteristics of the high-speed current limiting circuit breaker of the present invention.

Figure 7 is a graph of an operation time-current characteristic of the high-speed current limiting circuit breaker of the present invention.

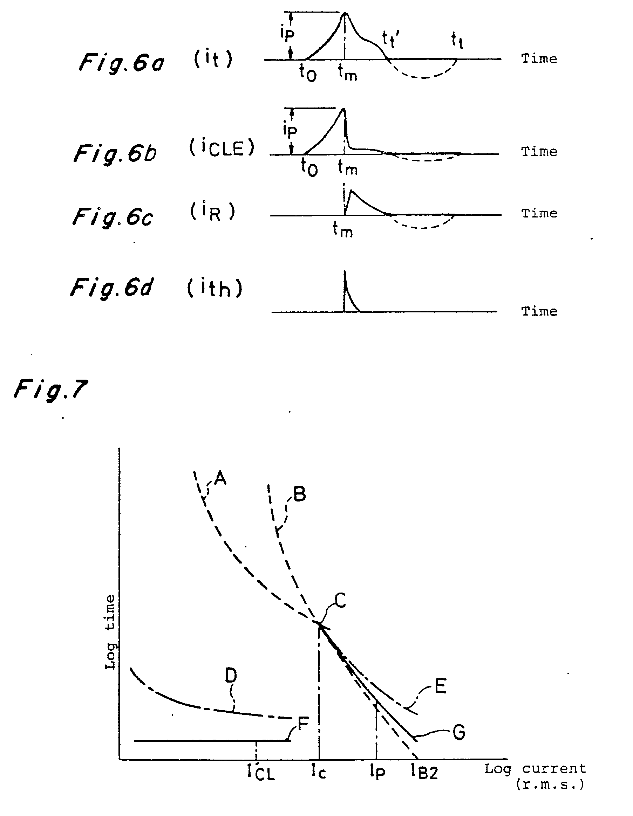

In Figure 5, a current limiting element 2 is connected in series with a circuit breaker 1 and a resistor 3 is connected in parallel with the current limiting element 2. A first current transformer 4 for detecting an overcurrent is provided between the current limiting element 2 and the circuit breaker 1. A first relay 5, for determining operation time and current of the circuit breaker 1 is connected to be actuated by the current transformer 4. A first trip coil 6 for tripping the circuit breaker is connected to the first relay 5, and a second current transformer 7 for detecting an operation of the current limiting element 2 is connected to a current detection pulse generator 11. The current detection pulse generator 11 in turn is connected to a gate of a thyristor 12. The thyristor 12, a capacitor 13 (functioning as a power source) and an electro-magnetic repulsion coil 14 are connected in series, as shown in Figure 5. A movable rod 15 inserted in the electro-magnetic repulsion coil 14 is disposed against the breaker 1. A circuit including a diode 16 and an A.C. power source 21 for energizing the capacitor 13, is connected across the capacitor 13.

In the embodiment, after the current limiting element 2 evaporates, an output of the second current transformer 7 is supplied to the current detection pulse generator 11, which is an operational amplifier for producing a trigger pulse. The trigger pulse turns on the thyristor 12 discharging the capacitor 13 through electro-magnetic repulsion coil 14. The movable rod 15 is disposed against the electro-magnetic repulsion coil 14, and the movable rod 15 knocks the latch (not shown) of the circuit breaker 1 in response to electro-magnetic repulsion. The capacitor 13 is thereafter charged by current through the diode 16 for the next operating cycle of the circuit breaker 1.

In Figure 6, waveforms (a), (b), (c) and (d) correspond to those of Figure 3. In waveforms (d) of Figure 6, current $i_{th}$ flows through the thyristor 12 and the electro-magnetic repulsion coil 14. The waveforms (a), (b), (c), (d) of Figure 6 show that, after current flows through the parallel resistor 3, the thyristor 12 is made conductive in a very short time and the movable rod 15 is operated. The dotted lines in the waveforms (a), (b) and (c) of Figure 6 indicate that the breaking of the overcurrent can be made at a time $t_t$, namely, in a time of one cycle, but in practice, breaking at an overcurrent is made only in 0.5 cycle. That is, the overcurrent is broken at a first zero-crossover point $t_t$, as shown by solid lines in the waveforms (a), (b) and (c) of Figure 6.

The time chart of Figure 4(b) shows that the time from the time $t_m$ when a current limiting element operates to the time $t_{pu}$ when the rod 15 trips the latch in the circuit breaker 1, is very short.

Figure 7 is a graph of characteristic curves of the operation time and current of the embodiment of the present invention. The operation characteristic of the circuit breaker 1 in accordance with the output of the second current transformer 7 of Figure 5, is determined in accordance with the current $i_{th}$ due to the conduction of the thyristor 12. Therefore, the characteristic curve is constant as shown by a curve F. It is apparent by comparing the curve F with the conventional curve D that the operation of the circuit breaker 1 in accordance with the output of the second current transformer 7 is executed at very high speed. Accordingly, the high-speed current limiting circuit breaker 20 of the present invention operates also at very high speed as shown by the curve G of the operation time-current characteristic.

As mentioned above, since the high-speed current limiting circuit breaker of the present invention operates at a very high speed after the current limiting element 2 operates, deterioration of the current limiting element 2 for each operation is decreased, and, hence, the number of times of repeated use increases. Therefore, the high-speed current limiting circuit breaker of the present invention has the advantage that the energy flowing upon overload is maintained low and damage to the circuit is reduced.

**Claims**

1. A high-speed current limiting circuit breaker comprising:
a self-recovery type current limiting element (2) for limiting a fault current,
a resistance (3) connected in parallel to said self-recovery type current limiting element,
a circuit breaker (1) connected in series to said self-recovery type current limiting element,
a first fault current detector (4) for detecting a fault current flowing through said circuit breaker, said first detector being disposed in series with said circuit breaker,
first breaker tripping means (5, 6) for tripping said circuit breaker in response to an output of said first fault current detector,
a second fault current detector (7) for detecting a fault current flowing through said parallel resistance,
a switching element (12) connected to be actuated by an output of said second fault current detector,
an electro-magnetic repulsion coil (14) which is connected in series to said switching element and a power source in a manner to be excited when said switching element is actuated, and
a movable rod (15) for breaking said circuit breaker by tripping a latch in said circuit breaker by electromagnetic repulsion when said coil is excited.

2. A high-speed current limiting circuit breaker in accordance with Claim 1, wherein

said switching element (12) is a thyristor.

3. A high-speed current limiting circuit breaker in accordance with Claim 1, wherein
said power source (13) is a capacitor which is connected in series to said switching element (12) and said electromagnetic repulsion coil (14).

4. A high-speed current limiting circuit breaker in accordance with Claim 2, wherein
said power source (13) is a capacitor which is connected in series to said switching element (12) and said electromagnetic repulsion coil (14).

**Patentansprüche**

1. Ein strombegrenzender Schnellschalter mit:
einem strombegrenzendenden Element (2) vom Selbstregenerierungstyp zur Begrenzung eines Fehlerstromes,
einem zu dem strombegrenzenden Element vom Selbstregenerierungstyp parallel geschalteten Widerstand (3),
einem zu dem strombegrenzenden Element vom Selbstregenerierungstyp in Serie geschalteten Schalter (1),
einem ersten Fehlerstromdetektor (4) zum Aufspüren eines Fehlerstromes, der durch den Schalter fließt, wobei der erste Detektor in Serie mit dem Schalter angeordnet ist,
einer ersten Schalterauslösevorrichtung (5, 6) zur Auslösung des Schalters als Antwort auf einen Ausgang des ersten Fehlerstromdetektors,
einem zweiten Fehlerstromdetektor (7) zur Aufspürung eines Fehlerstromes, der durch den Parallelwiderstand fließt,
einem Schaltelement (12), welches angeschlossen ist, um durch einen Ausgang des zweiten Fehlerstromdetektors betätigt zu werden,
einer elektromagnetischen Repulsionsspule (14), welche in Serie mit dem Schaltelement und einer Energiquelle derart geschaltet ist, daß sie erregt wird, wenn das Schaltelement betätigt wird, und einer beweglichen Stange (15) zur Öffnung des Schalters durch Betätigung eines Haltekreises in dem Schalter durch elektromagnetische Repulsion bei Erregung der Spule.

2. Ein strombegrenzender Schnellschalter nach Anspruch 1, in dem das schaltende Element (12) ein Thyristor ist.

3. Ein strombegrenzender Schnellschalter nach Anspruch 1, in dem die Energiquelle (13) ein Kondensator ist, der in Serie mit dem schaltenden Element (12) und der elektromagnetischen Repulsionsspule (14) zusammengeschaltet ist.

4. Ein strombegrenzender Schnellschalter nach Anspruch 2, in dem die Energiquelle (13) ein Kondensator ist, der in Serie mit dem schaltenden Element (12) und der elektromagnetischen Repulsionsspule (14) zusammengeschaltet ist.

**Revendications**

1. Un disjoncteur limiteur de courant rapide comprenant:
un élément de limitation de courant du type à autorétablissement (2), destiné à limiter un courant de défaut,

une résistance (3) connectée en parallèle sur l'élément de limitation de courant du type à autorétablissement,

un disjoncteur (1) connecté en série avec l'élément de limitation de courant du type à autorétablissement,

un premier détecteur de courant de défaut (4) destiné à détecter un courant de défaut qui circule dans le disjoncteur, ce premier détecteur étant branché en série avec le disjoncteur,

des premiers moyens de déclenchement de disjoncteur (5, 6), destinés à déclencher le disjoncteur sous l'effet d'un signal de sortie du premier détecteur de courant de défaut,

un second détecteur de courant de défaut (7), destiné à détecter un courant de défaut qui circule dans la résistance parallèle,

un élément de commutation (12) connecté de façon à être actionné par un signal de sortie du second détecteur de courant de défaut, une bobine à répulsion électromagnétique (14) qui est connectée en série avec l'élément de commutation et une source d'énergie, de manière à être excitée lorsque l'élément de commutation est actionné, et

une tige mobile (15) destinée à provoquer l'ouverture du disjoncteur en déchlenchant un verrou dans le disjoncteur, par répulsion électromagnétique, lorsque cette bobine est excitée.

2. Un disjoncteur limiteur de courant rapide selon la revendication 1, dans lequel

l'élément de commutation (12) est un thyristor.

3. Un disjoncteur limiteur de courant rapide selon la revendication 1, dans lequel

la source d'énergie (13) est un condensateur qui est connecté en série avec l'élément de commutation (12) et la bobine à répulsion électromagnétique (14).

4. Un disjoncteur limiteur de courant rapide selon la revendication 2, dans lequel

la source d'énergie (13) est un condensateur qui est connecté en série avec l'élément de commutation (12) et la bobine à répulsion électromagnétique (14).

*Fig. I* (PRIOR ART)

*Fig. 2*

*Fig. 3a* (i_t)

*Fig. 3b* (i_CLE)

*Fig. 3c* (i_R)

*Fig. 5*

20

Fig.4a

Fig.4b

Fig.6a (i$_t$)

Fig.6b (i$_{CLE}$)

Fig.6c (i$_R$)

Fig.6d (i$_{th}$)

Fig.7

4